# EUROPEAN PATENT APPLICATION

(11) **EP 0 768 209 A1**
(43) Date of publication of application: **16.04.1997**
(21) Application number: 95116011.8
(22) Date of filing: 11.10.1995
(51) Int. Cl.: B60Q 1/44

(54) **System for the protection and safety of passengers and pedestrians**

(71) Applicant: Vargas Elias, Jorge, Dr., 03810 Mexico, D.F. (MX)
(72) Inventor: Vargas Elias, Jorge, Dr., 03810 Mexico, D.F. (MX)
(74) Representative: LOUIS, PÖHLAU, LOHRENTZ & SEGETH

(57) **Abstract**

A system for the protection and safety of cars, passengers and pedestrians is described, adaptable to be installed in automotive vehicles having a gas pedal, a brake pedal and a battery, such as cars, tractors, trailers, trucks, buses, and the like. The system consists of a green light accelerator circuit which is energized when the driver presses the gas pedal, closing the contacts of its relay and lighting up its green light focus and is disenergized when the gas pedal is released opening the contacts of its relay so its green light focus goes out; a red light brake circuit which is energized when the driver presses the brake pedal, closing the contacts of its auxiliary relay and lighting up its red light focus, and is disenergized when the brake circuit is released, opening the contacts of its auxiliary relay so its red light focus goes out; and a white light sensor circuit which is energized by light entering the white light sensor, which is preferably covered by a small plastic tube, closing the contacts of its relay and lighting up its white light focus, and is disenergized when the sensor is no longer stimulated, opening the contacts of its relay so the white light focus goes out; and a first, second and third housing for housing the green light accelerator circuit, the red light brake circuit, and the white light sensor circuit.

## Description

### Field of The Invention

The present invention is related to vehicle signalling devices and, more exactly, to a system for the protection and safety of cars, passengers and pedestrians.

### Background of The Invention

At present, the austere vehicles have signalling and lighting systems, such as high and low white lights; parking backup and flashing red lights; turn left and turn right amber or yellow lights, manual and automatic door; dome, dashboard, interior lighting trunk and hood lights; as well as lighters, etc. Some automobiles also come equipped with search lights and light towers, lighting and sound systems, fog lights, etc..

Presently, vehicles do not include easily visible and detectable signalling systems for special incidents, accidents, emergencies, etc., producing countless automotive accidents involving partial or total loss of vehicles, partial or total injury to persons and, on many occasions, death, much to the dismay of the laws and economy of any country.

### Summary of The Invention

Taking into consideration each and every one of the disadvantages of the preceding situation, as well as many more unmentioned, the inventor of the present invention has run a countless number of studies, practice runs, tests and experiments leading him to design a completely-new system for the protection and safety of passengers and pedestrians which will overcome the disadvantages of previous solutions and provide numerous advantages, which are, by all means, of the utmost importance in the area of engineering involving this invention.

The present invention's system for the protection and safety of passengers and pedestrians consists of an electronic green-light accelerator circuit, an electronic red-light brake circuit, and an electronic white light sensor circuit, highly safe and reliable when operating and when off. The circuits are respectively located in small housings which can be mounted either inside or outside the cap of the vehicle, connecting the accelerator and brake light focus to the central and top part of the front windshield and the sensor light focus to the half top of the back windshield.

The system can be connected to the dashboard or similar part of any automotive vehicle such as automobiles, buses, trucks, tractor trailers, etc.. This system is made entirely from inexpensive components commonly found on the market. Should it break down, it can be repaired quickly and easily. The green-light accelerator circuit is energized. When the driver steps on the pedal, green light goes on and, when the driver lets up on it, green light goes out.

The green light serves in the present invention among others, to signal the drivers of the other vehicles and/or pedestrians out in front that the vehicle provided with the present invention is moving forwards. For example, if, at a crossing, the traffic light turns red and the vehicle in question continues rolling, other drivers and/or pedestrians will be able to take the proper precautions. There could be several possible problems:
1. The driver in question may be distracted or under the influence of some illness, alcohol, drugs, etc..
2. Something may be wrong with the brakes of the vehicle.
3. There may be a real emergency (rushing someone to the hospital, helping someone in serious trouble, getting away from an assailant, etc.).
4. The vehicle is going down a street, highway or narrow bridge or one being repaired, a single lane, etc.

The red-light brake circuit is energized by means of the brake pedal. When the driver steps on it, red light goes on and, when it is released, the red light goes out.

The red-light tells other drivers and/or pedestrians that the vehicle in question is braking or at a complete halt.

Other drivers and/or pedestrians can pass by front of that vehicle without risking an accident, etc..

The white light sensor circuit is connected to the dashboard or similar. It is energized manually from a button on the dashboard. When needed, it is pressed briefly for one or two seconds. The white light goes on and, upon release, off. The white light signals the driver of the trailing vehicle that its high beam is blinding the driver of the vehicle in question, by means of the reflecting mirrors, etc..

### Brief Description Of Drawings

- Figure 1: shows the green-light accelerator circuit for the system for the protection and safety for passengers and pedestrians of the present invention;
- Figure 2: shows a red-light brake circuit of the same system;
- Figure 3: shows a white light sensor circuit of the same system;
- Figure 4: is a full view of the front of the vehicle. The front windshield hosts a housing containing the green-light accelerator circuit (Figure 1) and another with a red-light brake circuit (Fiure 2), and
- Figure 5: is a full view of the rear end of a vehicle. The back windshield hosts a white light sensor circuit (Figure 3).

### Detailed Description Of the Invention

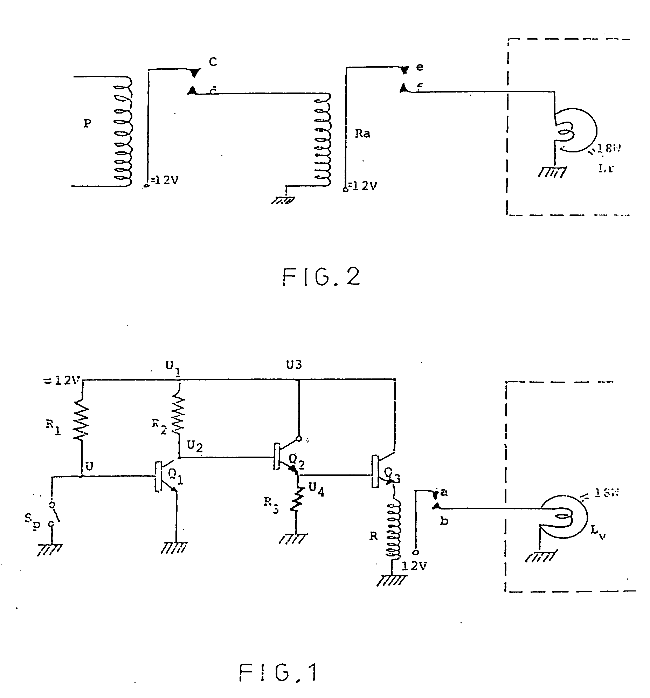

In the preferred presentation, the system for the protection and safety of cars, passengers and pedestrians in the present invention is formed by: a green-light accelerator circuit (Figure 1) connected to a battery (not illustrated), consisting of three NPN-type transistors, Q₁, Q₂ and Q₃. The base electrode of transistor Q₁ is connected to point U, joining a grounded accelerator sensor Sₚ and a resistance R₁. The other end of the latter is connected at point U₁, also joining resistance R₂. Voltage for transistor Q₁ base electrode is of approximately 12 volts. The collector electrode of transistor Q₁ is connected at point U₂, joining resistance R₂ and the base electrode of transistor Q₂, with the emitter electrode of transistor Q₁ grounded. The collector electrode of transistor Q₂ is connected at point U₃, joining resistance R₂ at point U₁ and the collector electrode of transistor Q₃, with emitter electrode of transistor Q₂ connected at point U₄, joining grounded resistance R₃ and the base electrode of transistor Q₃. The emitter electrode of transistor Q₃ is connected to grounded relay R. A green light bulb Lᵥ of approximately 18 watts is connected to relay R. Voltage for the emitter electrode of transistor Q₃ is approximately 12 volts.

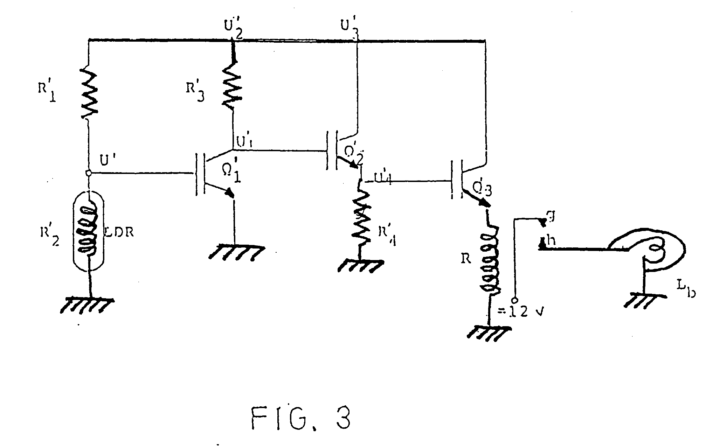

In this preferred presentation, the system for the protection and safety of passengers and pedestrians likewise includes: a red-light brake circuit (Figure 2), connected to a battery (not illustrated), consisting of a brake relay P with a voltage of approximately 12 volts. Connected to it, in a switchable manner, is an auxiliary relay Rₐ of a voltage of approximately 12 volts, also joining a red light bulb Lᵥ of approximately 12 watts. In the system there is a white light sensor circuit, (Figure 3) connected to the battery (not illustrated) consisting of three NPN-type transistors Q'₁, Q'₂ and Q'₃. The base electrode of transistor Q'₁ is connected at point U', also joining a resistance R'₁ and a LDR white light sensor with a resistance R'₂. The white light LDR sensor is also grounded. The emitter electrode of transistor Q'₁ is grounded, while the collector electrode of this same transistor Q'₁ is connected at point U'₁, joining the base electrode of transistor Q'₂ and a resistance R'₃, which, in turn, joining to point U'₂, joining resistance R'₁ and point U'₃, which connect the collector electrodes of transistors Q'₂ and Q'₃. Emitter electrode of transistor Q'₂ is connected at point U'₄, joining the grounded resistance R'₄ and the base electrode of transistor Q'₃. The emitter electrode of transistor Q'₃ is joined to relay R', likewise connecting a white light bulb L_{b}. The voltage of the emitter electrode of transistor Q₃ is approximately 12 volts.

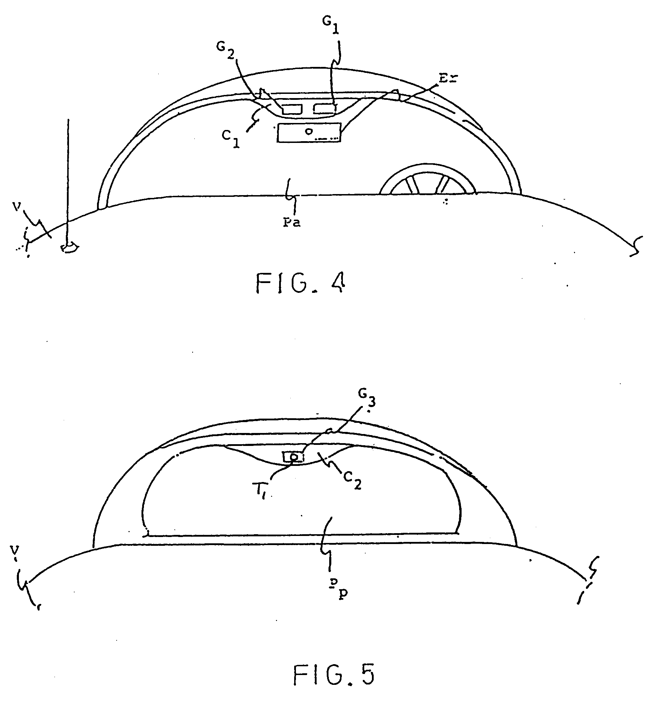

Figure 4 shows the front end of vehicle V, with a front windshield Pₐ with rearview mirror Eᵣ. A housing G₁ holding the green-light accelerator circuit Lᵥ (Figure 1) and a housing G₂ holding the red-light brake cicuit Lᵣ (Figure 2).

Figure 5 shows the rear end of vehicle V, with a back windshield Pₚ with a housing G₃, containing the white light sensor circuit L_{b} (Figure 3), with tube, T₁, around the body of the high-beam LDR sensor.

When the driver of a vehicle steps on the gas pedal, the pedal sensor Sₚ (Figure 1) closes the circuit of the grounded base electrode of transistor Q₁, said transistor Q₁ is cut off. When Q₁ is in cut off, the voltage in the base electrode of transistor Q₂ is approximately of 12 volts, by which transistor Q₂ remains in a saturation state. In the present invention, transistor Q₃ acts as an emitter follower. The voltage of the emitter electrode of transistor Q₃ is approximately 12 direct current volts. With it, relay R connected to that emitter electrode is energized, closing contacts a and b of the secondary winding of relay R and turning on the green light indicator Lᵥ in housing G₁ (Figure 4).

If the driver's foot releases the gas pedal, transistor Q₁ remains in a saturation state, so that both transistors Q₂ and Q₃ are immediately cut off, leaving inoperative relay R and the accelerator green light Lᵥ indicator is gone out.

When the driver of a vehicle presses the brake pedal, the red light indicator Lᵥ in the housing G₂ located at the front part of the vehicle lights up because of a relay closing the circuit, thanks to a pressure switch in the brake master cylinder. The same voltage used for the taillights is used in the system of lights for the protection and safety of the present invention. It is used to close contacts e and f of the primary winding of auxiliary relay Rₐ, which is used to close the red-light brake indicator circuit Lᵥ located in front part of the vehicle in housing G₂ (Figure 4). When the brake pedal is released, the entire circuit is deactivated and red light indicator Lᵥ also remains gone out. Auxiliary relay Rₐ is optional because the red-light indicator Lᵥ can be connected in parallel to the taillight system, if and when the brake relay P with its contacts c and d has the capacity to feed a red light focus of approximately 18 watts.

In the case the trailing vehicle has its high-beams on, blinding the driver of the vehicle with the present system, the white light sensor LDR of the sensor circuit (Figure 3) will drop its value enough for transistor Q'₁, to be cutted off, with transistors Q'₂ and Q'₃ remaining in a saturation state, activating relay R' of light L_{b} when its primary winding is energized by closing contacts g and h. In turn, white light indicator L_{b} located in the rear part of the vehicle in housing G₃ (Figure 5), lights up.

If there is no bright-light stimulus or there is a total absence of light, transistor Q'₁ remains in a saturation state and transistors Q'₂ and Q'₃ are in a cut off position, with which relay R' of white light bulb L_{b} is not energized and the respective light white bulb goes off. In order to guarantee that only very direct white bright-light stimuli, such as those from vehicle high beams, coming on the back of the vehicle in question activate the LDR sensor of the circuit in Figure 3, this circuit includes a small plastic tube T₁ covering the body of the white light LDR sensor, to avoid light coming in from the side. Moreover, there is a variable restistance R'₁ connected to the base electrode of transistor Q'₁. Adjusting the right value of said variable resistance R'₁, the LDR sensor of the circuit should be sensitive enough and respond adequately to successive stimuli of blinding direct light.

The green-light accelerator circuit and the red-light brake circuit are housed in housings G₁ and G₂, respectively, and the housings G₁ and G₂ mounted on the front windshield P of vehicle V, on the top of the rearview mirror Eᵣ (Figure 4). The white light sensor circuit is housed in housing G₃ and mounted in the housing G₃ on the back windshield Pₚ of vehicle V at the medium top part.

The accelerator brake and white light sensor circuits are connected to a commutable connection of the vehicle V fuse panel, which is switched by a starter switch passing through a 10-amp fuse previously installed in the vehicle. If this type of fuse panel does not exist, the respective connection should be modified to meet this goal or add a bypass fuse for each of the accelerator, brake and white light sensor circuits, such as those used in car radios. The light focus used in the accelerator, brake and white light sensor circuits are GE 1141 or equivalents. They are mounted in sockets or bayonet caps expressly designed to be used with a reflecting screen to be located behind a matching plastic honeycomb.

The mounting for the accelerator, brake and white light sensor circuits may form part of a housing similar to that at the rear of vehicles from 1992 on, indicating the brakes are being pressed.

It will be clear to experts in this area that a host of changes and modifications can be made to this invention, without deviating from the spirit and scope defined under the following claims.

## Claims

1. A system for the protection and safety of passengers and pedestrians, adaptable to vehicles (V) having a gas pedal and a brake pedal, comprising
a) a green-light accelerator circuit connected to the gas pedal and consisting of a pedal sensor (Sₚ), a first, second and third transistor (Q₁, Q₂, Q₃), wherein each transistor comprises a base electrode, a collector electrode and an emitter electrode, a first, second and third resistance (R₁, R₂, R₃), a first relay (R) and a first light bulb, mounted on vehicle structure visible from in front of the vehicle (V);
b) a red-light brake circuit connected to the brake pedal (Sₚ) and consisting of a brake relay (P), an auxiliary relay (Rₐ) and a second light bulb, mounted on vehicle structure visible from in front of the vehicle (V);
c) a high-beam sensor circuit consisting of a high-beam sensor, which is covered by a tube to guarantee that said sensor is only activated by stimulation by direct light, and is not activated by lateral light, fourth, fifth and sixth transistors, wherein each transistor comprises a base electrode, a collector electrode and an emitter electrode, fourth, fifth, sixth and seventh resistances, wherein the fourth resistance is a variable resistor connected to the high-beam sensor, and adjusted to a setting to guarantee that the high-beam light sensor will only respond to light from high-beams, a second relay and a third light bulb, mounted on vehicle structure visible from behind the vehicle; and
d) a first, second and third housing (G₁, G₂, G₃) to hold, respectively, the green-light accelerator circuit, the red-light brake circuit, and the high-beam sensor circuit.

2. A system for the protection and safety of passengers and pedestrians, in accordance with claim 1,
in which the first, second, third, fourth, fifth and sixth transistors are type NPN.

3. A system for the protection and safety of passengers and pedestrians, in accordance with claim 1,
in which, the green-light accelerator circuit:
a) the base electrode of the first transistor (Q₁) is connected to a first point together with the pedal sensor (Sₚ), which is grounded, and the first resistance (R₁);
b) the first resistance (R₁) is connected to a second point joining a second resistance (R₂);
c) the voltage of the base electrode of the first transistor (Q₁) is approximately 12 volts,
d) the collector electrode of the first transistor (Q₁) is connected to a third point joining the second resistance (R₂) and the base electrode of the second transistors (Q₂);
e) an emitter electrode of the first transistor (Q₁) is grounded;
f) a collector electrode of the second transistor (Q₂) is connected to a fourth point, joining the second resistance (R₂), through the second point and the collector electrode of the third transistor (Q₃);
g) the emitter electrode of the second transistor (Q₂) is connected to a fifth point, joining the third resistance (R₃), which is grounded, and a base electrode of the third transistor (Q₃);
h) the emitter electrode of the third transistor (Q₃) is connected to the first relay (R) having first and second grounded contacts;
i) the first relay (R) is connected, in turn, to the first light bulb (Lᵥ) for the green light, of approximately 18 watts, and
j) the voltage of the emitter electrode of the third transistor (Q₃) is approximately 12 volts.

4. A system for the protection and security of passengers and pedestrians, in accordance with claim 1,
in which the red-light brake system:
a) the brake relay (P) includes third and fourth contacts and is of a voltage of approximately 12 volts;
b) the brake relay (P) is connected as a switch to the auxiliary relay (Rₐ) having fifth and sixth contacts, the voltage being approximately 12 volts, and
c) the second light bulb (Lᵣ) for red light is approximately 18 watts.

5. A system for the protection and security of passengers and pedestrians, in accordance with claim 1,
in which, in the high-beam sensor circuit:
a) the base electrode of the fourth transistor is connected to a sixth point, joining the fourth resistance and the light sensor with the fifth resistance;
b) the high-beam sensor is grounded, as is the emitter electrode of the fourth transistor;
c) the collector electrode of the fourth transistor is connected to a seventh point, joining the base electrode of the fifth transistor and the sixth resistance;
d) the sixth resistance is linked to a eighth point, connecting the fourth resistance and a ninth point joining collector electrodes of the fifth and sixth transistor;
e) the emitter electrode of the fifth transistor is connected to a tenth point, joining the seventh resistance, which is grounded, and the base electrode of the sixth transistor;
f) the emitter electrode of the sixth transistor is connected to the second relay, including seventh and eigths contacts and having, likewise connected there, the third light bulb, of approximately 12 watts; and
g) the voltage of the emitter electrode of the sixth transistor is approximately 12 volts.

6. A system for the protection and security of passengers and pedestrians, in accordance with claim 1,
in which the green-light accelerator circuit is located in the first housing (G₁) and mounted on the vehicle's front windshield (P₂), close to the rearview mirror (Eᵣ).

7. A system for the protection and security of passengers and pedestrians, in accordance with claim 1,
in which the red-light brake circuit is located in the second housing (G₂) and mounted on the vehicle's front windshield (P₂), close to the rearview mirror (Eᵣ).

8. A system for the protection and security of passengers and pedestrians, in accordance with claim 1,
in which the sensor circuit is located in the third housing (G₃) and mounted on the vehicle's rear windshield (Eᵣ).

9. A system for the protection and safety of passengers and pedestrians, in accordance with claim 1,
in which:
a) when the vehicle's gas pedal is pressed, the pedal sensor (Sₚ) closes the circuit of the base electrode of the first transistor (Q₁), interrupting this first transistor (Q₁);
b) the voltage in the base electrode of the second transistor (Q₂) is nearly 12 volts;
c) the second transistor (Q₂) remains in a saturation state and the third transistor (Q₃) operates as an emitter follower;
d) the emitter electrode of the third transistor (Q₃) has a voltage of approximately 12 volts direct current;
e) the first relay (R) is charged, closing the first and second contacts of its primary winding and, therefore, lighting the first accelerator light bulb; and
f) when the gas pedal is released, the first transistor (Q₁) remains in a saturation state; immediately interrupting the second and third transistors (Q₂, Q₃) and deactivating the first relay (R) and immediately turning off the first accelerator light bulb.

10. A system for the protection and security of passengers and pedestrians, in accordance with claim 1,
in which:
a) when the brake pedal is pressed, the fourth and fifth contacts of the auxiliary relay (Rₐ) are closed, which, in turn, closes the brake-light indicator circuit, lighting the second light bulb of the brake light, and
b) when the brake pedal is released, it immediatly deactivates the entire brake circuit, instantly turning off the second brake light bulb.
